# EUROPÄISCHE PATENTANMELDUNG

(11) **EP 3 243 646 A1**
(43) Veröffentlichungstag der Anmeldung: **15.11.2017**
(21) Anmeldenummer: 17169336.9
(22) Anmeldetag: 03.05.2017
(51) Int. Cl.: B30B 9/32, B29B 17/00

(54) **KOMPAKTIERUNGSVORRICHTUNG FÜR LEERGUTRÜCKNAHMEAUTOMATEN**

(30) Priorität: 04.05.2016 DE 102016207702
(71) Anmelder: Ernst Hombach GmbH & Co. KG, 91486 Uehlfeld (DE)
(72) Erfinder: TOBOLLA, Timo, 91413 Neustadt/Aisch (DE); LINNEKOGEL, Frank, 99438 Bad Berka (DE)
(74) Vertreter: Kierdorf Ritschel Richly

(57) **Zusammenfassung**

Die Erfindung betrifft eine Kompaktierungsvorrichtung (1) für Leergutrücknahmeautomaten mit Mitteln zur Zuführung eines Gebindes an ein Kompaktier- und Schneidwerk (2), wobei das Kompaktier- und Schneidwerk (2) wenigstens eine Schneidwalze (3) umfasst, die mit einem federnd gelagerten Widerlager einen Walzenspalt begrenzt, in welchen das Gebinde einziehbar ist, wobei das Gebinde innerhalb des Walzenspaltes flachgedrückt wird. Die Kompaktierungsvorrichtung gemäß der Erfindung zeichnet sich dadurch aus, dass das Kompaktier- und Schneidwerk (2) Mittel zur Stauchung des flachgedrückten Gebindes gegen eine Transportrichtung der Schneidwalze (3) umfasst (Figur 1).

## Beschreibung

Die Erfindung betrifft eine Kompaktierungsvorrichtung für Leergutrücknahmeautomaten mit Mitteln zur Zuführung eines Gebindes an ein Kompaktier- und Schneidwerk, wobei das Kompaktier- und Schneidwerk wenigstens eine Schneidwalze umfasst, die mit einem federnd gelagerten Widerlager einen Walzenspalt begrenzt, in welchen das Gebinde einziehbar ist, wobei das Gebinde innerhalb des Walzenspaltes flachgedrückt wird.

Eine solche Kompaktierungsvorrichtung ist beispielsweise aus der DE 10 2010 060 913 A1 bekannt.

Die DE 10 2010 060 913 A1 betrifft eine Kompaktiervorrichtung für Rücknahmeautomaten zur Kompaktierung von Leergut mit Mitteln zum Zuführen des Leerguts entlang einer Zuführrichtung zu einem Verkleinerungsort, mit einer an dem Verkleinerungsort angeordneten Schneideinheit und mit einem Gegenhalter zum Verkleinern des Leerguts im Volumen quer zur Zuführrichtung, wobei der Gegenhalter über eine Federeinheit quer zur Zuführrichtung vorgespannt angeordnet ist, wobei sich die Kompaktiervorrichtung dadurch auszeichnet, dass die Federeinheit derart ausgebildet ist, dass bei Auslenkung des Gegenhalters, ausgehend von einer Nulllage, in einem ersten Auslenkungsbereich der Gegenhalter mit einer ansteigenden Federkraft beaufschlagt wird, und dass nach dem Überschreiten einer Übergangsauslenkung durch den Gegenhalter dieser bei weiterer Auslenkung in einem zweiten Auslenkungsbereich mit einer Federkraft auf dem Gegenhalter beaufschlagt wird, deren Federkraftanstieg kleiner ist als ein Federkraftanstieg in einem ersten Auslenkungsbereich.

Grundsätzlich ist eine Kompaktierungsvorrichtung der in der DE 10 2010 060 913 A1 beschriebenen Art dazu gedacht, Gebinde unterschiedlichen Durchmessers und unterschiedlicher Wandstärke so zu kompaktieren, dass diese im Wesentlichen flachgedrückt werden.

Solche Gebinde sind beispielsweise Einwegkunststoffflaschen, die nach der Kompaktierung wieder aufbereitet werden. Die Kompaktierung hat das Ziel, das Volumen der aufzubereitenden Gebinde zwecks Zwischenlagerung und Transport deutlich zu verringern, da sowohl Lagervolumen als auch Transportvolumen teuer sind.

Bekanntlich lassen sich annähernd kugelförmige Gegenstände mit einer verhältnismäßig hohen Packungsdichte und damit auch unter geringster Volumeninanspruchnahme lagern. Gebinde, die nur flachgedrückt werden, benötigen daher nach wie vor verhältnismäßig viel Lagervolumen, so dass es durchaus wünschenswert ist, eine Kompaktierung in Umfangsrichtung des Gebindes und in Längsrichtung des Gebindes vorzunehmen.

Kompaktierungsvorrichtungen, bei denen zu kompaktierende Gebinde durch einen sich in Transportrichtung verjüngenden Verdichtungskanal transportiert werden und die dabei in Umfangsrichtung kompaktiert werden, sind beispielsweise aus der EP 2 692 513 A1 bekannt. Diese Druckschrift beschreibt eine Kompaktierungsvorrichtung zum Kompaktieren von Gebinden, umfassend eine Kompaktiereinheit, die eine Einwurföffnung zum Einwerfen mindestens eines Gebindes, mindestens eine Vortriebseinrichtung zum Transportieren des Gebindes in Einfüllrichtung und eine Auswurföffnung zum Auswerfen des kompaktierten Gebindes aufweist. Die Kompaktiereinheit ist als Trichter ausgebildet, der sich zwischen der Einwurföffnung und der Auswurföffnung erstreckt und hin zu der Auswurföffnung verjüngt, wobei die Kompaktiereinheit mehrere Vortriebseinrichtungen aufweist, die in Umfangsrichtung um die Einfüllrichtung und um den Trichter angeordnet sind und sich entlang einer den Trichter einhüllenden Mantelfläche erstrecken. Die Vortriebseinrichtungen in Form von angetriebenen Ketten sind symmetrisch am Umfang des Trichters angeordnet. Diese Konstruktion hat den Nachteil, dass sie verhältnismäßig aufwendig ist und dass sie aufgrund der Konstruktion des Trichters anfällig für Blockaden ist.

Um einen möglichst hohen Kompaktierungsgrad der Gebinde zu erzielen, ist der Kompaktierungsvorrichtung gemäß EP 2 692 513 A1 eine Nachkompaktiereinheit nachgeschaltet, in welcher eine Nachverdichtung beziehungsweise Stauchung der radial verdichteten Gebinde erfolgt.

Die zuvor beschriebene Anordnung von Kompaktiereinheit und Nachkompaktiereinheit gemäß Stand der Technik ist außerordentlich aufwendig.

Der Erfindung liegt daher die Aufgabe zugrunde, eine Kompaktierungsvorrichtung der eingangs benannten Art bereitzustellen, die mit einfachsten Mitteln eine hohe Kompaktierungsrate von Gebinden erzielt, wobei die Kompaktierungsvorrichtung insbesondere unanfällig für Störungen sein soll.

Die Erfindung wird gelöst mit einer Kompaktierungsvorrichtung mit den Merkmalen des Anspruchs 1. Vorteilhafte Ausgestaltungen der Kompaktierungsvorrichtung gemäß der Erfindung ergeben sich aus den Unteransprüchen.

Ein Gesichtspunkt der Erfindung betrifft eine Kompaktierungsvorrichtung für Leergutrücknahmeautomaten mit Mitteln zur Zuführung eines Gebindes an ein Kompaktier- und Schneidwerk, wobei das Kompaktier- und Schneidwerk wenigstens eine Schneidwalze umfasst, die mit einem federnd gelagerten Widerlager einen Walzenspalt begrenzt, in welchen das Gebinde einziehbar ist, wobei das Gebinde innerhalb des Walzenspalts flachgedrückt wird, wobei die Kompaktierungsvorrichtung sich unter anderem dadurch auszeichnet, dass das Kompaktier- und Schneidwerk Mittel zur Stauchung des flachgedrückten Gebindes gegen eine Transportrichtung der Schneidwalze umfasst.

Die Kompaktierungsvorrichtung gemäß der Erfindung kann beispielsweise Teil eines Leergutrücknahmeautomaten oder einer Leergutrücknahmestation sein, bei der ein Verbraucher Leergut, beispielsweis in einem Ladengeschäft, gegen Rückgabe eines Pfandes abgeben kann. Ein Leergutrücknahmeautomat nimmt dabei das Leergut in Form von Gebinden, beispielsweise Einwegplastikflaschen oder Getränkedosen, an und führt dieses Gebinde der Kompaktierungsvorrichtung gemäß der Erfindung zu.

Die erfindungsgemäße Kompaktierungsvorrichtung bewerkstelligt mit relativ einfachen Mitteln ein Flachdrücken des zu kompaktierenden Gebindes sowie eine Stauchung des flachgedrückten Gebindes gegen eine Transportrichtung der Schneidwalze, so dass trotz des Umstandes, dass das Gebinde nicht gleichmäßig in Umfangsrichtung verdichtet wird, eine verhältnismäßig hohe Verdichtungsrate erreicht wird. Als Ergebnis der Verdichtung wird ein flachgedrücktes und nach Art einer Ziehharmonika zusammengestauchtes kompaktiertes Gebinde erhalten.

Mit dem Kompaktier- und Schneidwerk gemäß der Erfindung wird vor und während des Flachdrückens des Gebindes eine Perforation beziehungsweise ein Einschneiden des Gebindes erreicht, wodurch eine Verpressung beziehungsweise ein Flachdrücken auch dann effektiv bewirkt wird, wenn das Gebinde beispielsweise mittels eines Deckelverschlusses noch verschlossen ist. Durch das federnd nachgiebig gelagerte Widerlager wird gewährleistet, dass das Schneidwerk und die Schneidwalze sich unterschiedlichen Gebindedurchmessern anpassen können. Das Widerlager bewirkt darüber hinaus ein Flachdrücken des Gebindes.

Die Schneidwalze kann beispielsweise mittels Schneidmessern in entsprechende Schlitze in einer Andruckplatte als Widerlager eingreifen.

Als Mittel zur Zuführung des Gebindes an das Kompaktier- und Schneidwerk kann beispielsweise ein Flügelrad oder beispielsweise ein Paddelrad vorgesehen sein.

Das Widerlager kann beispielsweise einen Einlauf in den Walzenspalt bilden, der abschüssig angeordnet ist, so dass das Gebinde teilweise unter Einwirkung von Schwerkraft in den Walzenspalt gelangt.

Bei einer bevorzugten Variante der Kompaktierungsvorrichtung gemäß der Erfindung ist vorgesehen, dass als Mittel zur Stauchung des Gebindes wenigstens ein Verzögerungswerk vorgesehen ist, welches mit dem Walzenspalt und/oder hinter dem Walzenspalt einen Stauraum bildet, durch welchen das Gebinde hindurch gefördert wird, wobei das Gebinde eine Stauchung gegen die Transportrichtung erfährt.

Eine solche Stauchung kann beispielsweise dadurch bewirkt werden, dass die Transportgeschwindigkeit des Gebindes durch das Verzögerungswerk relativ zur Umlaufgeschwindigkeit des Kompaktier- und Schneidwerks verlangsamt ist, so dass sich dadurch eine Stauchung ergibt.

Eine vorteilhafte Variante der Kompaktierungsvorrichtung gemäß der Erfindung zeichnet sich dadurch aus, dass als Verzögerungswerk wenigstens ein Endlosfördermittel vorgesehen ist. Das Verzögerungswerk kann beispielsweise ein Endlosfördermittel in Form eines endlos umlaufend geführten Kettenbandes umfassen.

Das Verzögerungswerk ist vorzugsweise angetrieben. Das Verzögerungswerk kann beispielsweise eines oder mehrere angetriebene Kettenbänder umfassen, wobei zweckmäßigerweise die Kettenbänder mit einer geringeren Umlaufgeschwindigkeit umlaufen als die Schneidwalze.

Vorzugsweise bilden das oder die Kettenbänder im Bereich des Auslaufs des Walzenspaltes einen Stauraum, in welchen das Gebinde hineingefördert wird.

Bei einer besonders bevorzugten Variante der Erfindung sind die Kettenbänder federnd nachgiebig gelagert, so dass diese bei erhöhtem Staudruck in dem Stauraum nachgeben können.

Damit das zu kompaktierende Gebinde nicht angetrieben durch das Kompaktier- und Schneidwerk durch den Stauraum hindurchrutscht, umfasst das Verzögerungselement zweckmäßigerweise Mitnehmerelemente, die in Eingriff mit dem Gebinde gelangen.

Als Mitnehmerelemente können beispielweise Stacheln oder Dornen vorgesehen sein.

Die Stacheln oder Dornen können beispielsweise an einem oder mehreren endlos umlaufenden Kettenbändern angeordnet sein. Die Ketten der Kettenbänder können beispielsweise als Laschenketten ausgebildet sein, an deren Lasche Stacheln oder Dornen befestigt sind.

Die Kettenbänder können beispielsweise zwischen zwei oder mehreren Kettenrädern endlos umlaufend angeordnet sein.

Wie vorstehend bereits erwähnt, kann als Widerlager eine schwenkbar gelagerte Druckplatte vorgesehen sein.

In der Druckplatte können beispielsweise Schlitze vorgesehen sein, durch die einzelne Messer der Schneidwalze hindurchgreifen. Die Druckplatte kann etwa die Breite der Schneidwalze aufweisen. Mehrere parallel angeordnete Kettenbänder, die ein Kettenbandpaket bilden, können in der Breite etwa eine Erstreckung aufweisen, die der Breite der Schneidwalze entspricht.

Bei einer besonders bevorzugten Variante der Kompaktierungsvorrichtung gemäß der Erfindung kann vorgesehen sein, dass die Druckplatte bei Auslenkung durch das Gebinde mit einem Betätigungsschalter für das Verzögerungswerk zusammenwirkt, so dass erst dann ein Antrieb für das Verzögerungswerk in Gang gesetzt wird, wenn das Gebinde in den Walzenspalt eingezogen wird und die Druckplatte aufgrund dessen eine Auslenkung erfährt.

Bei einer weiteren bevorzugten Ausführungsform der Kompaktierungsvorrichtung gemäß der Erfindung ist vorgesehen, dass das Verzögerungswerk ein federnd nachgiebig gelagertes Kettenbandpaket aufweist, dessen Breite wenigstens der Breite des Widerlagers entspricht und das sich in Transportrichtung über den Walzenspalt hinaus erstreckt und so den Stauraum nach unten begrenzt.

Die Erfindung wird nachstehend anhand eines in den Zeichnungen dargestellten Ausführungsbeispiels erläutert.

Es zeigen:
- Figur 1: eine schematische Seitenansicht der Kompaktierungsvorrichtung gemäß der Erfindung,
- Figur 2: eine Draufsicht auf die Kompaktierungsvorrichtung Figur 1,
- Figur 3: eine perspektivische Ansicht der Kompaktierungsvorrichtung gemäß Figur 1 in Einzugsrichtung des Gebindes und
- Figur 4: eine perspektivische Ansicht der Kompaktierungsvorrichtung gemäß Figur 1 gegen die Einzugsrichtung des Gebindes.

Die Kompaktierungsvorrichtung 1 gemäß der Erfindung umfasst im Wesentlichen ein Kompaktier- und Schneidewerk 2 mit einer drehbar angetriebenen Schneidwalze 3 und einer federnd gelagerten Druckplatte 4 als Widerlager beziehungsweise Gegenhalter. Die Druckplatte 4 ist mittels einer ersten Federeinheit 5, die nur andeutungsweise dargestellt ist, federnd in Richtung auf die Schneidwalze 3 vorgespannt und begrenzt mit dieser einen Walzenspalt.

Die Druckplatte 4 ist geschlitzt beziehungsweise mit Langlöchern 6 versehen, welche mit scheibenförmigen Messern 7 der Schneidwalze 3 kämmen.

Die Schneidwalze 3 ist drehbar angetrieben, wobei sich die Drehachse der Schneidwalze senkrecht zu einer mit einem Pfeil angedeuteten Zufuhrrichtung der Kompaktierungsvorrichtung erstreckt. Eine Antriebseinheit für die Schneidwalze 3 ist aus Gründen der Vereinfachung nicht dargestellt, ebensowenig wie ein die Kompaktierungsvorrichtung 1 umgebendes Gehäuse dargestellt ist.

Die Messer 7 sind mit einer Vielzahl von in Umfangrichtung verteilt angeordneten Zacken ausgestattet, die das Material eines zugeführten Gebindes 8 eindrücken und aufschlitzen beziehungsweise aufschneiden, wenn das Gebinde 8 in den Walzenspalt zwischen der Schneidwalze 3 und der Druckplatte 4 gelangt.

Die Druckplatte 4 ist im Wesentlichen als ebene Platte ausgebildet, die in einem die Kompaktierungsvorrichtung 1 umgebenden Gehäuse beispielsweise geneigt zu einer Horizontalen, das heißt abschüssig angeordnet ist. Der Schneidewalze 3 in Zuführrichtung vorgelagert ist ein Flügelrad 9, welches drehbar ist, dessen Drehachse sich parallel zur Drehachse der Schneidwalze 3 erstreckt und welches mehrere Flügel 10 oder Paddel aufweist, gegen die zunächst das einzuführende Gebinde 8 anliegt, wie dies in den Figuren andeutungsweise dargestellt ist. Das Flügelrad 9 kann getaktet gedreht werden, so dass dieses einerseits ein Hineinrutschen des Gebindes 8 in den Walzenspalt ermöglicht und andererseits der darauffolgende Flügel 10 das Gebinde erfasst und weiterbefördert.

Zwei Flügel 10 des Flügelrades 9 sowie die Schneidwalze 3 begrenzen einen Verdichtungsraum, in den das Gebinde 8 eingeschoben wird.

Je nach Festigkeit und Durchmesser des Gebindes 8 gibt die Druckplatte 4 mehr oder weniger nach, das Gebinde 8 wird in den Walzenspalt eingezogen und in diesem flachgedrückt, wobei die Messer 7 der Schneidwalze 3 das Gebinde 8 gleichzeitig schlitzen und/oder perforieren.

Unterhalb der Schneidwalze 3 ist ein Kettenbandpaket 11 angeordnet, welches mit der Schneidwalze 3 einen Stauraum begrenzt. Das Kettenbandpaket 10 besteht aus einer Vielzahl von Kettenbändern 11, die endlos umlaufend um zwei Umlenkritzel 13 geführt sind. Wenigstens eines der Umlenkritzel ist drehbar angetrieben. Die Umlenkritzel 13 erstrecken sich parallel zur Drehachse der Schneidwalze 3. Das Kettenbandpaket 11 wird vorzugsweise mit einer Umlaufgeschwindigkeit angetrieben, die kleiner als die Drehgeschwindigkeit der Schneidwalze 3 ist, wobei die Umlenkritzel 13 im Uhrzeigersinn drehen, wohingegen die Schneidwalze 3 gegen den Uhrzeigersinn dreht.

Die Kettenbänder 12 sind jeweils als Laschenketten ausgebildet und an ihrer Außenseite mit Dornen 14 versehen, die als Mitnehmerelemente für das Gebinde 8 wirken. Diese verhindern auch ein Durchrutschen des Gebindes 8.

Das von dem Walzenspalt abliegende Umlenkritzel 13 des Kettenbandpaketes ist federnd nachgiebig gelagert, und zwar ist dieses über eine zweite Federeinheit 15 in dem nicht dargestellten Gehäuse der Kompaktierungsvorrichtung 1 abgestützt.

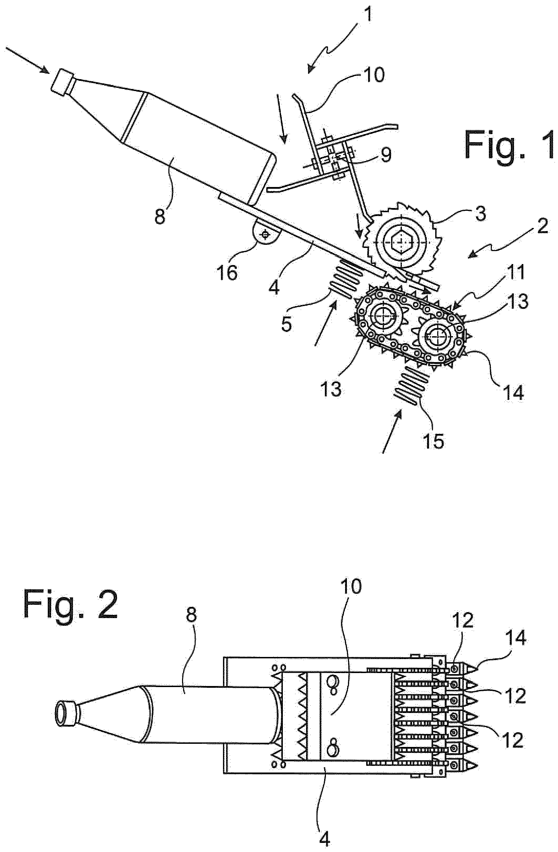

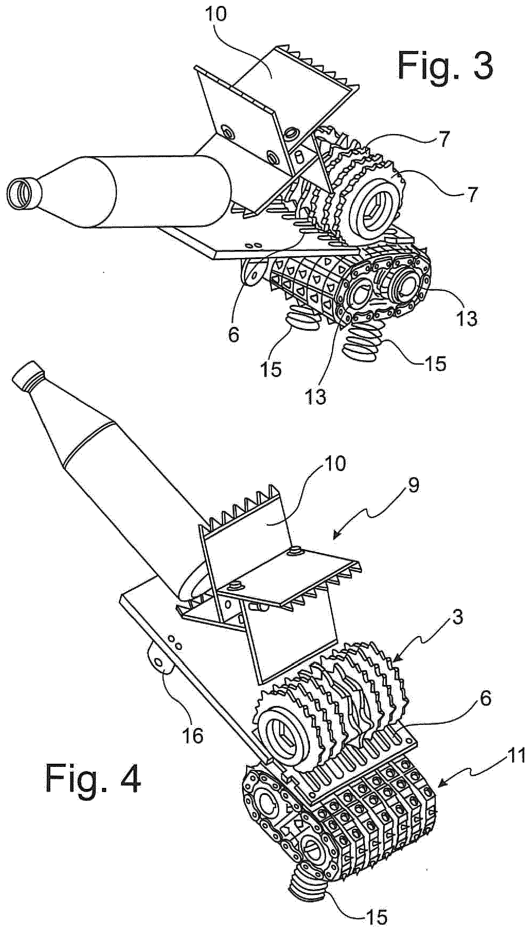

Die Druckplatte 4 beziehungsweise das Widerlager ist zweigeteilt, wobei ein erster Teil der Druckplatte, wie dies Figur 1 andeutungsweise zu entnehmen ist, schwenkbar um ein Schwenklager 16 gelagert ist. Das in den Verdichtungsraum hineingeförderte Gebinde 8 bewirkt, dass der schwenkbare Teil der Druckplatte 4 beziehungsweise das Widerlager ausgelenkt wird, so dass das Gebinde 8 in den Walzenspalt eingezogen wird. Ein weiterer Teil der Druckplatte 4, der starr angeordnet ist, bildet eine Verlängerung des Walzenspaltes. Dieser Teil der Druckplatte ist insbesondere in Figur 4 auslaufseitig des Walzenspaltes dargestellt. Dieser Teil der Druckplatte 4 bildet mit dem Kettenbandpaket 11 einen Stauraum, das heißt eine Verlängerung des Walzenspaltes, in den das Gebinde, nachdem es flachgedrückt wurde, hineingefördert wird. Aufgrund des Umstandes, dass die Kettenbänder 12 langsamer laufen als die Schneidwalze 3, wird das flachgedrückte Gebinde 8 in dem so erzeugten Stauraum gestaucht und wie eine Ziehharmonika zusammengefaltet. Wird der Druck im Stauraum zu hoch, kann das in Zuführrichtung letzte Umlenkritzel 13 gegen die Federkraft der zweiten Federeinheit 15 ausweichen, so dass somit sichergestellt ist, dass die Kompaktierungsvorrichtung 1 bei großen Gebinden nicht blockiert.

### Bezugszeichenliste:

- 1: Kompaktierungsvorrichtung
- 2: Kompaktier- und Schneidwerk
- 3: Schneidwalze
- 4: Druckplatte
- 5: erste Federeinheit
- 6: Langlöcher
- 7: Messer
- 8: Gebinde
- 9: Flügelrad
- 10: Flügel
- 11: Kettenbandpaket
- 12: Kettenbänder
- 13: Umlenkritzel
- 14: Dornen
- 15: zweite Federeinheit
- 16: Schwenklager

## Patentansprüche

1. Kompaktierungsvorrichtung (1)für Leergutrücknahmeautomaten mit Mitteln zur Zuführung eines Gebindes an ein Kompaktier-und Schneidwerk (2), wobei das Kompaktier-und Schneidwerk (2) wenigstens eine Schneidwalze(3) umfasst, die mit einem federnd gelagerten Widerlager einen Walzenspalt begrenzt, in welchen das Gebinde(8) einziehbar ist, wobei das Gebinde (8)innerhalb des Walzenspaltes flachgedrückt wird, **dadurch gekennzeichnet, dass** das Kompaktier-und Schneidwerk(2) Mittel zur Stauchung des flachgedrückten Gebindes(8) gegen eine Transportrichtung der Schneidwalze(3) umfasst.

2. Kompaktierungsvorrichtung (1) nach Anspruch 1, **dadurch gekennzeichnet, dass** als Mittel zur Stauchung des Gebindes(8) wenigstens ein Verzögerungswerk vorgesehen ist welches mit dem Walzenspalt und/oder hinter dem Walzenspalt einen Stauraum bildet, durch welchen das Gebinde(8) hindurch gefördert wird, wobei das Gebinde(8) eine Stauchung gegen die Transportrichtung erfährt.

3. Kompaktierungsvorrichtung (1) nach Anspruch 2, **dadurch gekennzeichnet, dass** als Verzögerungswerk wenigstens ein Endlosfördermittel vorgesehen ist.

4. Kompaktierungsvorrichtung (1) nach einem der Ansprüche 2 oder 3, **dadurch gekennzeichnet, dass** das Verzögerungswerk wenigstens ein endlos umlaufend geführtes Kettenband (12), vorzugsweise ein Kettenbandpaket (11), mit mehreren endlos umlaufenden Kettenbändern(12) umfasst.

5. Kompaktierungsvorrichtung nach einem der Ansprüche 1 bis 4, **dadurch gekennzeichnet, dass** das Verzögerungswerk angetrieben ist.

6. Kompaktierungsvorrichtung (1) nach einem der Ansprüche 4 oder 5, **dadurch gekennzeichnet, dass** das oder die Kettenbänder (12) federnd nachgiebig gelagert sind.

7. Kompaktierungsvorrichtung(1) nach einem der Ansprüche 1 bis 6, **dadurch gekennzeichnet, dass** das Verzögerungswerk Mitnehmerelemente umfasst, die in Eingriff mit dem Gebinde (8)gelangen.

8. Kompaktierungsvorrichtung (1) nach Anspruch 7, **dadurch gekennzeichnet, dass** als Mitnehmerelemente Stacheln oder Dornen(14) vorgesehen sind.

9. Kompaktierungsvorrichtung (1) einem der Ansprüche 1 bis 8, **dadurch gekennzeichnet, dass** das Widerlager als schwenkbar gelagerte Druckplatte (4) ausgebildet ist.

10. Kompaktierungsvorrichtung (1) nach Anspruch 9, **dadurch gekennzeichnet, dass** die Druckplatte (4) bei Auslenkung durch das Gebinde (8) mit einem Betätigungsschalter für das Verzögerungswerk zusammenwirkt.

11. Kompaktierungsvorrichtung (1) nach einem der Ansprüche 1 bis 10, **dadurch gekennzeichnet, dass** das Verzögerungswerk ein federnd nachgiebig gelagertes Kettenbandpaket(11) aufweist, dessen Breite wenigstens der Breite des Widerlagers entspricht und dass sich in Transportrichtung über den Walzenspalt hinaus erstreckt
